# EUROPEAN PATENT APPLICATION

(11) **EP 4 455 177 A1**
(43) Date of publication of application: **30.10.2024**
(21) Application number: 23169855.6
(22) Date of filing: 25.04.2023
(51) Int. Cl.: C08G 18/08, C08G 18/24, C08G 18/42, C08G 18/44, C08G 18/78, C08G 18/79, C09D 175/06

(54) **USE OF THERMOLATENT CATALYST TO IMPROVE PROPERTIES OF SINGLE-LAYER POLYURETHANE COATINGS**

(71) Applicant: Covestro Deutschland AG, 51373 Leverkusen (DE)
(72) Inventor: Siegemund, Sven, 51399 Burscheid (DE); Melchiors, Martin, 42799 Leichlingen (DE)
(74) Representative: Levpat

(57) **Abstract**

The present invention relates to a process for producing a single-layer polyurethane coated plastic substrate, comprising or consisting of the following steps:
a) providing a plastic substrate;
b) applying a polyurethane coating system onto the substrate;
c) curing the polyurethane coating system to form the single-layer polyurethane coated plastic substrate;
wherein the polyurethane coating system comprises or consists of
A) at least one polyisocyanate;
B) at least one NCO-reactive compound;
C) at least one thermally latent catalyst;
D) optionally auxiliaries and/or additives.

## Description

The present invention relates to a process for producing a single-layer polyurethane coated plastic substrate, a single-layer polyurethane coated plastic substrate obtainable or obtained by this process and the use of the single-layer polyurethane coated plastic substrate. Moreover, the invention relates to the use of a thermally latent catalyst for improving the adhesion and/or the chemical resistance of the before-mentioned single-layer polyurethane coated plastic substrate.

### Prior art

Polyurethane coatings and their products are well known in the art and used in many different technical fields like for instance the automotive industry. These coatings can be applied in single- or multiple layers.

In multi-layer coating systems, a primer is first applied onto the substrate, which, according to the substrate, is intended to improve the adhesion between the substrate and the subsequent layers, and also serves to protect the substrate from corrosion if it is prone to corrosion. Typically, one or more coloring and/or effect layers are applied to the primer-surface, which are referred to as the basecoat. Finally, a highly crosslinked clearcoat is generally applied to the basecoat, which ensures the desired shiny appearance and protects the paint system (coating system) from environmental effects. Due to these multiple layers, a multi-layer coating system has the disadvantage that the layers have to be applied and also often cured one after the other, which results in several process steps. In addition, the individual layers must be matched to each other in terms of their properties.

In contrast, single-layer coatings can be applied onto the respective surface and subsequently be cured to directly provide the coated substrate, making this type of coating very efficient in terms of time and process economy as well as costs. Such a single-layer polyurethane coatings are for instance commonly used for industrial metal coatings.

However, due specific challenges when coating plastic surfaces, such as e.g. surface tension / surface energy, thermal expansion and flexibility of plastic substrates, adhesion to the plastic surface (originally and under use conditions) often is difficult to achieve. Thus, a primer is used, which enhances the adhesion of the coating system onto the substrate, covered by a transparent or pigmented topcoat. In contrast, due to lack of such primer layer, single-layer coatings often have the disadvantage of having a low adhesion to the substrate. This is especially true for single-layer coatings which shall provide high chemical resistance when coated onto a plastic substrate.

Thus, there is still a need for a single-layer polyurethane coated plastic substrate with good chemical resistance, wherein the adhesion between the polyurethane coating system and the plastic substrate is improved in an easy and straightforward way.

### Problem

Therefore, it is an object of the present invention to provide a straightforward process for producing a single-layer polyurethane coated plastic substrate, wherein the single-layer polyurethane coated plastic substrate has a good or improved chemical resistance, in particular in combination with an improved or at least similar adhesion between the plastic substrate and the polyurethane coating in comparison to equivalent multi-layer coating systems and/or single-layer coating systems not according to the invention.

### Solution and detailed description

This object is achieved by a process for producing a single-layer polyurethane coated plastic substrate, comprising or consisting of the following steps:
a) providing a plastic substrate;
b) applying a polyurethane coating system onto the substrate;
c) curing the polyurethane coating system to form the single-layer polyurethane coated plastic substrate;
wherein the polyurethane coating system comprises or consists of
A) at least one polyisocyanate;
B) at least one NCO-reactive compound;
C) at least one thermally latent catalyst;
D) optionally auxiliaries and/or additives.

In the course of the development work, which has led to the present invention, it was surprisingly found that the use of a thermally latent catalyst in the polyurethane coating system (also called paint or lacquer) leads to a single-layer polyurethane coated plastic substrate, which has good or very good chemical resistance as well as an improved adhesion between the polyurethane coating system and the plastic substrate compared to ones using common catalysts like for instance dibutyltin dilaurate.

In the context of the present invention, chemical resistance is to be understood as the resistance of the single-layer polyurethane coated plastic substrate against chemicals. For this purpose, a small cotton swab/bud soaked with chemical (premium gasoline (SB), MPA (methoxy propyl acetate (MPA), xylene (X), ethanol (EtOH), water (H₂O), etyl acetate (EtAc) and / or methyl ethyl ketone (MEK)) according to DIN 51604-1 as test substance is placed on the coated surface and covered with a watch glass to prevent evaporation. After an exposure time of 1 min or 5 min, the cotton bud soaked with test substance is removed, the exposed area is dried and immediately visually and manually inspected by palpation and scratching. Softening or discoloration of the paint surface was evaluated as follows:
0 = no changes; 1 = swelling ring, hard surface, only visible change / traces of change in color shade; 2 = swelling ring, slight softening / slight change in color shade; 3 = distinct softening (possibly slight blistering) / medium change in color shade / surface can be scratched; 4 = significant softening (possibly severe blistering), can be scratched through to the substrate / significant change in color shade; 5 = coating completely destroyed without outside influence / very significant change in color shade.

Furthermore, in the context of the invention adhesion is evaluated and determined by means of the diamond scratching test (crosscut adhesion test) according to DIN EN ISO 2409:2013 (spacing of blades 1 mm). Loose pieces/flakes of paint/coating were removed using a fabric adhesive tape, which was pressed onto the crosscut with a finger and suddenly torn off. The damage to the paint/coating was viewed with a magnifying glass and visually assessed, with 0 indicating no damage to the cut edges and 5 indicating complete detachment of the paint within the grid. Moreover, the adhesion is preferably also determined after exposure to moisture, wherein the coated substrate (panels/sheets) were stored at 90°C and 90% relative humidity for 5 days, then allowed to rest at room temperature for 1 hour to regenerate, and a crosscut adhesion test as described before is performed again.

In the context of the invention, the term plastic in plastic substrates also comprehends fiber-reinforced plastics, for example glass- or carbon fiber-reinforced plastics, and plastics blends composed of two or more polymer types. Preferably, the plastic substrate comprises a polymeric material selected from the group, comprising or consisting of polycarbonate; polycarbonate blends, especially polycarbonate-polyester blends, polycarbonate-acrylonitrile butadiene styrene blends or mixtures thereof; polyester, polyester blends; acrylonitrile butadiene styrene; acrylonitrile butadiene styrene blends or mixtures thereof, preferably polycarbonate and/or polycarbonate-acrylonitrile butadiene styrene blends. More preferably the plastic substrate comprises or consists of polycarbonate-acrylonitrile butadiene styrene blends.

The polyisocyanate A) used here may in principle be any polyisocyanate or polyisocyanate mixtures known to the person skilled in the art to be suitable for the preparation of polyurethanes, especially aliphatic and/or cycloaliphatic polyisocyanates. In the context of the invention, polyisocyanates are compounds having at least two isocyanate groups per molecule. The polyisocyanate A) may have biuret, uretdione, isocyanurate, iminooxadiazinedione, allophanate, urethane and/or carbodiimide/uretonimine structural units. The polyisocyanate A) preferably is a derivative of hexamethylene diisocyanate and/or pentamethylene diisocyanate, more preferably a hexamethylene diisocyanate trimer and/or a pentamethylene diisocyanate trimer.

According to the invention, the polyurethane coating system comprise at least one NCO-reactive compound B) (isocyanate-reactive). An NCO-reactive compound is understood to mean a compound that can react with polyisocyanates to give polyisocyanate polyaddition compounds, especially polyurethanes. NCO-reactive compounds used may be any compounds known to those skilled in the art that have a mean OH or NH functionality of at least 1.5. The NCO-reactive compound B) is preferably selected from the group, comprising or consisting of polymeric polyols such as polyether polyols, polyester polyols, polyurethane polyols, polysiloxane polyols, polycarbonate polyols, polyetherpolyamines, polybutadiene polyols, polyacrylate polyols, polymethacrylate polyols, copolymers thereof or mixtures thereof, preferably polyester polyols, polycarbonate polyols, polycarbonate-polyester polyols, polyacrylate polyols or mixtures thereof. Low molecular weight OH containing substances such as ethane-1,2-diol, propane-1,3-diol, propane-1,2-diol, butane-1,4-diol, glycerol, trimethylolpropane, pentaerythritol can optionally be used as blend partners for above mentioned polymeric polyols.

The polymeric polyhydroxyl compounds preferably have mass-average molecular weights Mw > 500 daltons, measured by means of gel permeation chromatography (GPC) against a polystyrene standard, more preferably between 800 and 100 000 daltons, especially between 1000 and 50 000 daltons.

The polymeric polyhydroxyl compounds preferably have an OH number of 30 to 400 mg KOH/g, especially between 100 and 300 KOH/g. The hydroxyl number (OH number) indicates how many mg of potassium hydroxide are equivalent to the amount of acetic acid bound by 1 g of substance in the acetylation. In the determination, the sample is boiled with acetic anhydride/pyridine, and the acid formed is titrated with potassium hydroxide solution (DIN 53240-2).

The glass transition temperatures, measured with the aid of DSC measurements according to DIN EN ISO 1 1357-2, of the polymeric polyhydroxyl compounds are preferably between -150 and 100°C, more preferably between -120°C and 80°C.

Polyether polyols are obtainable in a manner known per se, by alkoxylation of suitable starter molecules under base catalysis or using double metal cyanide compounds (DMC compounds). Suitable starter molecules for the preparation of polyether polyols are, for example, simple low molecular weight polyols, water, organic polyamines having at least two N-H bonds, or any desired mixtures of such starter molecules.

Preferred starter molecules for preparation of polyether polyols by alkoxylation, especially by the DMC process, are especially simple polyols such as ethylene glycol, propylene 1,3-glycol and butane-1,4-diol, hexane-1,6-diol, neopentyl glycol, 2-ethylhexane-1,3-diol, glycerol, trimethylolpropane, pentaerythritol, and low molecular weight hydroxyl-containing esters of such polyols with dicarboxylic acids of the type specified hereinafter by way of example, or low molecular weight ethoxylation or propoxylation products of such simple polyols, or any desired mixtures of such modified or unmodified alcohols. Alkylene oxides suitable for the alkoxylation are especially ethylene oxide and/or propylene oxide, which can be used in the alkoxylation in any sequence or else in a mixture.

Polyether polyols based on tetrahydrofuran, such as poly-THF diols, which are known in the art, can be used, too.

Suitable polyester polyols are described, for example, in EP-A-0 994 1 17 and EP-A-1 273 640. Polyester polyols can be prepared in a known manner by polycondensation of low molecular weight polycarboxylic acid derivatives, for example succinic acid, adipic acid, suberic acid, azelaic acid, sebacic acid, dodecanedioic acid, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, dimer fatty acid, trimer fatty acid, phthalic acid, phthalic anhydride, isophthalic acid, terephthalic acid, citric acid or trimellitic acid, with low molecular weight polyols, for example ethylene glycol, diethylene glycol, neopentyl glycol, hexanediol, butanediol, propylene glycol, glycerol, trimethylolpropane, 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol, or by ring-opening polymerization of cyclic carboxylic esters such as ε-caprolactone. In addition, it is also possible to polycondense hydroxycarboxylic acid derivatives, for example lactic acid, cinnamic acid or ω-hydroxycaproic acid to give polyester polyols. However, it is also possible to use polyester polyols of oleochemical origin. Such polyester polyols can be prepared, for example, by full ring-opening of epoxidized triglycerides of an at least partly olefinically unsaturated fatty acid-containing fat mixture with one or more alcohols having 1 to 12 carbon atoms and by subsequent partial transesterification of the triglyceride derivatives to alkyl ester polyols having 1 to 12 carbon atoms in the alkyl radical.

Suitable polycarbonate polyols are linear or sligthly branched, having molecular weights Mn of 400 to 6000, preferably 600 to 3000. They are typically produced by reaction of carbonic acid derivates such as diphenyl carbonate, dimethyl carbonate or phosgen with polyols, preferably diols. Suitable diols are e.g. ethyleneglycol, 1,2- propanediol, 1,3-propanediol, 1,3-butanediol, 1,4-butanediol, 1,6-hexanediol, 1,8-octanediol, neopentylglykol, 1,4-bishydroxymethylcyclohexane, 2-methyl-1,3-propanediol, 2,2,4-trimethylpentanediol-1,3, dipropyleneglykol, polypropylenglykols, dibutyleneglykol, polybutyleneglykols, bisphenol A, tetrabromobisphenol A and also lactone modified diols. Polyether-polycarbonate diols, as described e.g. in DE-A-3717060 can be used, too.

Preferably the polycarbonate polyols are linear. Slighty branched polycarbonate polyols, produced by (partially) using polyfunctional OH compounds, such as e.g. glycerine, trimethylole propane (TMP), hexanetriol-1,2,6, butanetriol-1,2,4, trimethylolethane, penta-erythrit, sugar-based alcohols e.g. mannitol, sorbitol, methylglycoside or 1,3,4,6-dian-hydrohexite, may be used, too.

Polyurethane polyols are preferably prepared by reaction of polyester or polycarbonate prepolymers with suitable di- or polyisocyanates and are described, for example, in EP-A-1 273 640. Suitable polysiloxane polyols are described, for example, in WO-A-01/09260, and the polysiloxane polyols cited therein can preferably be used in combination with further polyhydroxyl compounds, especially those having higher glass transition temperatures.

The polyacrylate polyols that are very particularly preferred in accordance with the invention are generally copolymers and preferably have mass-average molar masses Mw between 1000 and 20 000 daltons, especially between 5000 and 10 000 daltons, measured in each case by means of gel permeation chromatography (GPC) against a polystyrene standard. The glass transition temperature of the copolymers is generally between -100 and 100°C, especially between -50 and 80°C (measured by means of DSC measurements according to DIN EN ISO 1 1357-2).

The polyacrylate polyols preferably have an OH number of 60 to 250 mg KOH/g, especially between 70 and 200 KOH/g, and an acid number between 0 and 30 mg KOH/g. The acid number here indicates the number of mg of potassium hydroxide which is used for neutralization of 1 g of the respective compound (DIN EN ISO 21 14).

The preparation of suitable polyacrylate polyols is known per se to those skilled in the art. They are obtained by free-radical polymerization of olefinically unsaturated monomers having hydroxyl groups or by free-radical copolymerization of olefinically unsaturated monomers having hydroxyl groups with optionally other olefinically unsaturated monomers, for example ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate or lauryl methacrylate, cycloalkyl acrylates and/or cycloalkyl methacrylates, such as cyclopentyl acrylate, cyclopentyl methacrylate, isobornyl acrylate, isobornyl methacrylate or especially cyclohexyl acrylate and/or cyclohexyl methacrylate. Suitable olefinically unsaturated monomers having hydroxyl groups are especially 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate and especially 4-hydroxybutyl acrylate and/or 4-hydroxybutyl methacrylate.

Further monomer units used for the polyacrylate polyols may be vinylaromatic hydrocarbons, such as vinyltoluene, alpha-methylstyrene or especially styrene, amides or nitriles of acrylic acid or methacrylic acid, vinyl esters or vinyl ethers, and in minor amounts especially acrylic acid and/or methacrylic acid.

It is preferred that the NCO-reactive compound B) is a polyhydroxyl compound. Preferably, the polyhydroxyl compound is selected from the group consisting of polyester polyols, polyurethane polyols, polysiloxane polyols, polycarbonate polyols, polyacrylate polyols and mixtures thereof.

Furthermore, it is preferred that the ratio of polyisocyanates A) to NCO-reactive compounds B), based on the molar amounts of the polyisocyanates groups relative to the NCO-reactive groups, is from 0.8:1.0 to 2.0:1.0, preferably from 1.0:1.0 to 1.5:1.0, more preferably from 1.05:1.0 to 1.25:1.0.

The polyurethane coating system of the invention contains at least one thermally latent catalyst C). According to the invention, a thermally latent catalyst means any catalyst that does not accelerate or does not significantly accelerate the crosslinking reaction of the at least one polyisocyanate with the at least one NCO-reactive compound to form a urethane bond below its activation temperature, which is preferably between 50°C and 70°C. Thus, below a temperature of 25°C, especially below 30°C, preferably below 40°C, the thermally latent catalyst does not significantly accelerate the crosslinking reaction, but it significantly accelerates it above 60°C, especially above 70°C. "Does not significantly accelerate" means here that the presence of the thermally latent catalyst in polyurethane coating system does not have any significant effect below 25°C, especially below 30°C, preferably below 40°C, on the reaction rate of the reaction that proceeds in any case. A significant acceleration is understood to mean that the presence of the thermally latent catalyst has a distinct effect on the reaction rate above 60°C, especially above 70°C, in the coating layer on the reaction that proceeds in any case. Preferred thermally latent catalysts C) are inorganic tin-containing compounds having no direct tin-carbon bond. It is further preferred that the thermally latent catalyst C) comprises or consists of a cyclic tin compound of the formular I, II or III or mixtures thereof: 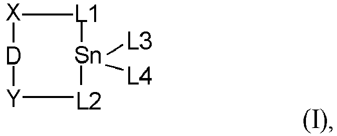 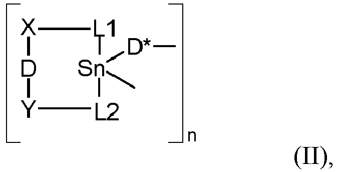 with n > 1, 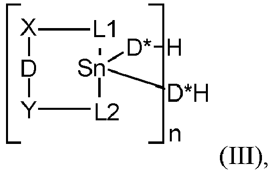 with n > 1, where:
D is -O-, -S- or -N(R1)-
   where R1 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen or the radical 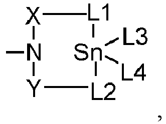 or R1 and L3 together are -Z-L5-;
D* is -O- or -S-;
X, Y and Z are identical or different radicals selected from alkylene radicals of the formulae -C(R2)(R3)-, -C(R2)(R3)-C(R4)(R5)- or -C(R2)(R3)-C(R4)(R5)-C(R6)(R7)- or ortho-arylene radicals of the formulae 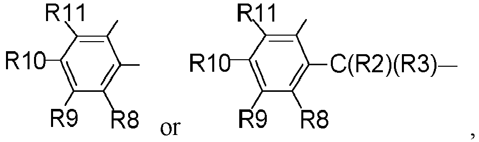 where R2 to R11 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen;
L1, L2 and L5 are independently -O-, -S-, -OC(=O)-, -OC(=S), -SC(=O)-, -SC(=S)-, - OS(=O)₂O-, -OS(=O)₂- or -N(R12)-,
   where R12 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen;
L3 and L4 are independently -OH, -SH, -OR13, -Hal, -OC(=O)R14, -SR15, - OC(=S)R16, -OS(=O)₂OR17, -OS(=O)₂R18 or -NR19R20, or L3 and L4 together are - L1-X-D-Y-L2-,
where R13 to R20 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen.

Preferably, D is -N(R1)-.

Preferably, R1 is hydrogen or an alkyl, aralkyl, alkaryl or aryl radical having up to 20 carbon atoms or the radical 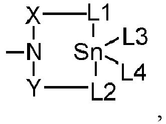
more preferably hydrogen or an alkyl, aralkyl, alkaryl or aryl radical having up to 12 carbon atoms or the radical 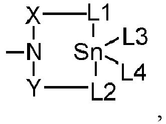
most preferably hydrogen or a methyl, ethyl, propyl, butyl, hexyl or octyl radical, where propyl, butyl, hexyl and octyl are all isomeric propyl,
butyl, hexyl and octyl radicals, or Ph-, CH₃Ph- or the radical

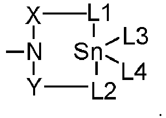

Preferably, D* is -O-.

Preferably, X, Y and Z are the alkylene radicals -C(R2)(R3), -C(R2)(R3)-C(R4)(R5)- or the ortho-arylene radical

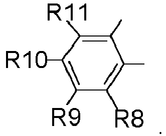

Preferably, R2 to R7 are hydrogen or alkyl, aralkyl, alkaryl or aryl radicals having up to 20 carbon atoms, more preferably hydrogen or alkyl, aralkyl, alkaryl or aryl radicals having up to 8 carbon atoms, even more preferably hydrogen or alkyl radicals having up to 8 carbon atoms, even further preferably hydrogen or methyl.

Preferably, R8 to R11 are hydrogen or aryl radicals having up to 8 carbon atoms, more preferably hydrogen or methyl.

Preferably, L1, L2 and L5 are -NR12-, -S-, -SC(=S)-, -SC(=O)-, -OC(=S)-, -O-, or - OC(=O)-, more preferably -O-, or -OC(=O)-.

Preferably, R12 is hydrogen or an alkyl, aralkyl, alkaryl or aryl radical having up to 20 carbon atoms, more preferably hydrogen or an alkyl, aralkyl, alkaryl or aryl radical having up to 12 carbon atoms, even more preferably hydrogen or a methyl, ethyl, propyl, butyl, hexyl or octyl radical, where propyl, butyl, hexyl and octyl are all isomeric propyl, butyl, hexyl and octyl radicals.

Preferably, L3 and L4 are -Hal, -OH, -SH, -OR13, -OC(=O)R14, where the R13 and R14 radicals have up to 20 carbon atoms, more preferably up to 12 carbon atoms.

More preferably, L3 and L4 are Cl-, MeO-, EtO-, PrO-, BuO-, HexO-, OctO-, PhO-, formate, acetate, propanoate, butanoate, pentanoate, hexanoate, octanoate, laurate, lactate or benzoate, where Pr, Bu, Hex and Oct are all isomeric propyl, butyl, hexyl and octyl radicals, even further preferably Cl-, MeO-, EtO-, PrO-, BuO-, HexO-, OctO-, PhO-, hexanoate, laurate or benzoate, where Pr, Bu, Hex and Oct are all isomeric propyl, butyl, hexyl and octyl radicals.

Preferably, R15 to R20 are hydrogen or alkyl, aralkyl, alkaryl or aryl radicals having up to 20 carbon atoms, more preferably hydrogen or alkyl, aralkyl, alkaryl or aryl radicals having up to 12 carbon atoms, even more preferably hydrogen or methyl, ethyl, propyl, butyl, hexyl or octyl radicals, where propyl, butyl, hexyl and octyl are all isomeric propyl, butyl, hexyl and octyl radicals.

The L1-X, L2-Y and L5-Z units are preferably -CH₂CH₂O-, -CH₂CH(Me)O-, - CH(Me)CH₂O-, -CH₂C(Me)₂O-, -C(Me)₂ CH₂O- or -CH₂C(=O)O-.

The L1-X-D-Y-L2 unit is preferably: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CH₂C(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, where Pr, Bu, Hex and Oct may be all isomeric propyl, butyl and octyl radicals, PhN[CH₂CH₂O-]₂, PhN[CH₂CH(Me)O-]₂, PhN[CH₂CH(Me)O-][CH(Me)CH₂O-], PhN[CH₂C(Me)₂O-]₂, PhN[CH₂C(Me)₂O-][C(Me)₂CH₂O-], PhN[CH₂C(=O)O-]₂,

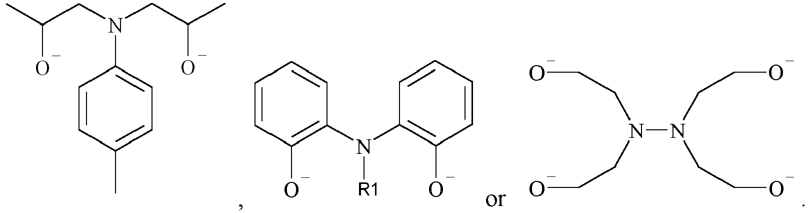

Processes for preparing the thermally latent catalysts suitable in accordance with the invention are described, for example, in: EP 2 900 716 A1, EP 2 900 717 A1, EP 2 772 496 A1, EP 14182806, J. Organomet. Chem. 2009 694 3184- 3189, Chem. Heterocycl.Comp. 2007 43 813- 834, Indian J. Chem. 1967 5 643- 645 and in literature cited therein, the entire disclosure content of which is hereby incorporated by reference.

As is known to the person skilled in the art, tin compounds have a propensity to oligomerize, and so there are often polynuclear tin compounds or mixtures of mono- and polynuclear tin compounds. In the polynuclear tin compounds, the tin atoms are preferably connected to one another via oxygen atoms ('oxygen bridges'). Typical oligomeric complexes (polynuclear tin compounds) form, for example, through condensation of the tin atoms via oxygen or sulfur, for example 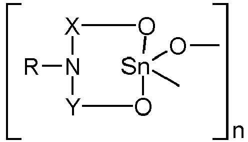 where n > 1 (cf. formula II). Cyclic oligomers are frequently encountered in the case of low degrees of oligomerization, linear oligomers with OH or SH end groups in the case of high degrees of oligomerization (cf. formula III).

In one embodiment of the invention, the thermally latent catalyst is selected from the group of mono- and polynuclear tin compounds of the following type:
1,1-di-"R"-5-"organyl"-5-aza-2,8-dioxa-1-stannacyclooctanes,
1,1-di-"R"-5-(N-"organyl")aza-3,7-di-"organyl"-2,8-dioxa-1-stannacyclooctanes,
1,1-di-"R"-5-(N-"organyl")aza-3,3,7,7-tetra-"organyl"-2,8-dioxa-1-stannacyclooctanes,
4,12-di-" organyl - 1, 7,9,15 -tetraoxa-4,12-diaza-8-stannaspiro[7.7]pentadecanes,
4,12-di-"organyl-2,6,10,14-tetra-"organyl"-1,7,9,15-tetraoxa-4,12-diaza-8-stannaspiro[7.7]pentadecanes,
4,12-di-"organyl"-2,2,6,6,10,10,14,14-octa-"organyl"-1,7,9,15-tetraoxa-4,12-diaza-8-stannaspiro[7.7]pentadecanes,
where "R" is D*, L3 or L4, as defined above, and "organyl" is R1, as defined above.

In a preferred embodiment of the invention, the thermally latent catalyst is selected from:
4,12-di-n-butyl-1,7,9,15-tetraoxa-4,12-diaza-8-stannaspiro[7.7]pentadecane,
4,12-di-n-butyl-2,6,10,14-tetramethyl-1,7,9,15-teraoxa-4,12-diaza-8-stannaspiro[7.7]pentadecane,
2,4,6,10,12,14-hexamethyl-1,7,9,15-teraoxa-4,12-diaza-8-stannaspiro[7.7]pentadecane,
4,12-di-n-octyl-2,6,10,14-tetramethyl-1,7,9,15-tetraoxa-4,12-diaza-8-stannaspiro[7.7]pentadecane,
4,12-di-n-octyl-1,7,9,15-tetraoxa-4,12-diaza-8-stannaspiro[7.7]pentadecane,
4,12-dimethyl-1,7,9,15-tetraoxa-4,12-diaza-8-stannaspiro[7.7]pentadecane,
1,1-dichloro-5-methyl-5-aza-2,8-dioxa-1-stannacyclooctane
or mixtures thereof.

It is further preferred that the thermally latent catalyst C) comprises or consists of a cyclic tin compound selected from the group, comprising or consisting of 4,12-Di-n-butyl-1,7,9,15-tetraoxa-4,12-diaza-8-stannaspiro[7.7]pentadecan, 4,12-Di-n-butyl-2,6,10,14-tetramethyl-1,7,9,15-tetraoxa-4,12-diaza-8-stannaspiro[7.7]pentadecan, 4,12-Di-n-butyl-2,2,10,10-tetramethyl-1,7,9,15-tetraoxa-4,12-diaza-8-stannaspiro[7.7]pentadecan, 4,12-Di-n-butyl-2,2,10-trimethyl-1,7,9,15-tetraoxa-4,12-diaza-8-stannaspiro[7.7]pentadecan, 4,12-Di-n-butyl-2,10-dimethyl-1,7,9,15-tetraoxa-4,12-diaza-8-stannaspiro[7.7]pentadecan, 4,12-Di-n-butyl-2,2-dimethyl-1,7,9,15-tetraoxa-4,12-diaza-8-stannaspiro[7.7]pentadecan, 4,12-Di-n-butyl-2-methyl-1,7,9,15-tetraoxa-4,12-diaza-8-stannaspiro[7.7]pentadecan, 2,2,4,10,10,12-Hexamethyl-1,7,9,15-tetraoxa-4,12-diaza-8-stannaspiro[7.7]pentadecan or mixtures thereof.

The concentration of tin originated from the thermally latent catalyst C) is preferably from 50 to 2000 ppm, preferably from 100 to 1500 ppm, more preferably from 500 to 1000 ppm, based on the solid content of the polyisocyanate A).

The thermally latent catalysts can be combined with further catalysts/activators known from the prior art; for example titanium, zirconium, bismuth, tin(II) and/or iron catalysts, as described, for example, in WO 2005/058996. It is also possible to add amines or amidines as co-catalysts. In addition, in the polyisocyanate polyaddition reaction, it is also possible to add acidic compounds, for example 2-ethylhexanoic acid, or alcohols to control the reaction.

The polyurethane coating system may additionally comprise typical additives and other auxiliaries (such as solvents) in effective amounts. Effective amounts for solvents are preferably up to 150% by weight, more preferably up to 100% by weight and especially up to 70% by weight, based in each case on the nonvolatile constituents of the respective coating composition (polyurethane coating system). Effective amounts of other additives are preferably up to 25% by weight, more preferably up to 10% by weight and especially up to 5% by weight, based in each case on the nonvolatile constituents of the respective coating composition (polyurethane coating system).

Examples of suitable additives and auxiliaries are especially light stabilizers such as UV absorbers and sterically hindered amines (HALS), and also stabilizers, fillers and antisettling agents, defoaming, anticratering and/or wetting agents, leveling agents, film-forming auxiliaries, matting agents, reactive diluents, solvents, substances for rheology control, slip additives and/or components which prevent soiling and/or improve the cleanability of the cured paints.

The use of light stabilizers, especially of UV absorbers, for example substituted benzotriazoles, S-phenyltriazines or oxalanilides, and of sterically hindered amines, especially having 2,2,6,6-tetramethylpiperidyl structures - referred to as HALS - is described by way of example in A. Valet, Lichtschutzmittel für Lacke [Light Stabilizers for Coatings], Vincentz Verlag, Hanover, 1996.

Stabilizers, for example free-radical scavengers and other polymerization inhibitors such as sterically hindered phenols, stabilize paint components during storage and are intended to prevent discoloration during curing. Acidic stabilizers are also useful for isocyanate-containing components, such as alkyl-substituted partial phosphoric esters and water scavengers such as triethyl orthoformate.

Preferred fillers are those compounds that have no adverse effect on the appearance of the clearcoat or topcoat layer. Examples are nanoparticles based on silicon dioxide, aluminum oxide or zirconium oxide; reference is also made additionally to the Römpp Lexicon »Lacke und Druckfarben« [Coatings and Printing Inks] Georg Thieme Verlag, Stuttgart, 1998, pages 250 to 252.

If there are fillers, flatting agents or pigments in the clearcoat or topcoat, the addition of antisettling agents may be advisable to prevent separation of the constituents in the course of storage.

Wetting and leveling agents improve surface wetting and/or the leveling of coatings. Examples are fluoro surfactants, silicone surfactants and specific polyacrylates. Rheology control additives are important in order to control the properties of the liquid coating on application and in the leveling phase on the substrate and are additives known, for example, from patent specifications WO 94/22968, EP-A-0 276 501, EP-A-0 249 201 or WO 97/12945; crosslinked polymeric microparticles as disclosed, for example, in EP-A-0 008 127; inorganic sheet silicates such as aluminum-magnesium silicates, sodium-magnesium and sodium-magnesium-fluorine-lithium sheet silicates of the montmorillonite type; silicas such as Aerosil^{®}; or synthetic polymers having ionic and/or associative groups such as polyvinyl alcohol, poly(meth)acrylamide, poly(meth)acrylic acid, polyvinylpyrrolidone, styrene-maleic anhydride or ethylene-maleic anhydride copolymers and derivatives thereof, or hydrophobically modified ethoxylated urethanes or polyacrylates.

Suitable solvents should be used in a manner known to the person skilled in the art, matched to the binders used and to the application process. Solvents are intended to dissolve the components used and promote the mixing thereof, and to avoid incompatibilities. In addition, during the application and the curing, they should facilitate film forming and crosslinking reaction, finally resulting in a dried paint layer ("coating layer") with very good appearance and without defects such as popping or pinholes.

The polyurethane coating system may also contain pigments, dyes and/or fillers. The pigments used for this purpose including metallic or other effect pigments, dyes and/or fillers are known to those skilled in the art.

In order to facilitate the application of the polyurethane coating system in step b), the NCO-reactive compound B) and/or the polyisocyanate A) may be present in a suitable solvent. Suitable solvents are those which have sufficient solubility for the NCO-reactive compound and/or the polyisocyanate and are free of groups reactive toward isocyanates. Examples of such solvents are ketones such as acetone, methyl ethyl ketone, cyclohexanone, methyl isobutyl ketone, methyl isoamyl ketone, diisobutyl ketone, esters such as ethyl acetate, n-butyl acetate, 2-methoxypropyl acetate (MPA) ethylene glycol diacetate, butyrolactone, diethyl carbonate, propylene carbonate, ethylene carbonate, or other solvents such as N,N-dimethylformamide, N,N-dimethylacetamide, N-methylpyrrolidone, N-ethylpyrrolidone, methylal, ethylal, butylal, 1,3-dioxolane, glycerol formal, benzene, toluene, n-hexane, cyclohexane or Solvent Naphtha.

The polyurethane coating system can be applied to the substrate in steps b) of the process of the invention from solution, dispersion in a liquid dispersant such as water, or from the melt, and in the case of powder coatings in solid form. Preference is given to application from organic solution. Suitable methods of application are, for example, printing, painting, rolling, casting, dipping, fluidized bed methods and/or preferably spraying, for example compressed air spraying, airless spraying, high rotation, electrostatic spray application (ESTA), optionally combined with hot spray application, for example hot-air spraying.

A flash-off and film forming step is preferably conducted between step b) and c), wherein the film forming step is at least performed for a duration of 30 seconds. During the film formation step, there is coagulation and film formation of polyurethane coating system applied to the plastic substrate. Solvents and/or water present gradually leave the film by evaporation. This operation can be accelerated by heat supplied or air flow at the surface of the coating. This shrinks the film. Typically, in parallel with the evaporation of the solvent, the crosslinking reaction of the at least one polyisocyanate A) with the at least one NCO-reactive compound B) in the polyurethane coating system commences. Especially the supply of heat or catalytically active coating/paint constituents can accelerate the crosslinking reaction. In the context of the invention, it is essential that the crosslinking reaction does not proceed during the film formation phase, or proceeds only to such a slow degree that the polyisocyanates are not significantly crosslinked. Depending on the conditions like air temperature, air flow, rel. humidity it can take seconds to minutes in the process of the invention for the film to form in step d) and for any solvents and/or water present to have essentially left the film. "Essentially" means that more than 60%, preferably more than 85% and more preferably more than 95% of the amount of solvent and/or water used has left the film. Preferably, the flash-off and film formation step of the process of the invention is complete after 1 to 5 minutes, more preferably after 2 to 3 minutes, prior to starting the curing step c) by heating.

The curing in step c) takes preferably place at a plastic substrate temperature below 120°C, more preferably below 110°C, even more preferably below 100°C, especially below 90°C, wherein the curing in step c) is preferably complete within less than 45 minutes, more preferably within less than 40 minutes, even more preferably less than 35 minutes, most preferably within less than 30 minutes. "Essentially complete" as used here means that the residual isocyanate content after the curing in step d) is less than 20%, preferably less than 15%, especially preferably less than 10%, more preferably less than 5%, even more preferably less than 3%, based on the isocyanate content of the polyisocyanate in step b). The percentage of isocyanate groups still present can be determined by comparison of the content of isocyanate groups in % by weight in step b) with the content of isocyanate groups in % by weight after the curing in step c), for example by comparison of the intensity of the isocyanate band at about 2270 cm-1 by means of IR spectroscopy.

The invention further relates to a single-layer polyurethane coated plastic substrate obtainable or obtained by a process according to the invention.

In addition, the invention also relates to the use of a single-layer polyurethane coated plastic substrate according to the invention for or as an automotive part(s) or other industrial plastic good(s), especially domestic appliances or electronic devices.

Since the addition of a thermally latent catalyst leads inter alia to an improvement of the adhesion and/or chemical resistance, the invention also relates to the use of a thermally latent catalyst, especially a thermally latent catalyst as described above, for improving the adhesion and/or the chemical resistance of a single-layer polyurethane coated plastic substrate according to the invention.

### Embodiments

The present invention in particular relates to the following embodiments:
According to a first embodiment, the invention relates to a process for producing a single-layer polyurethane coated plastic substrate, comprising or consisting of the following steps:
a) providing a plastic substrate;
b) applying a polyurethane coating system onto the substrate;
c) curing the polyurethane coating system to form the single-layer polyurethane coated plastic substrate;
wherein the polyurethane coating system comprises or consists of
A) at least one polyisocyanate;
B) at least one NCO-reactive compound;
C) at least one thermally latent catalyst;
D) optionally auxiliaries and/or additives.

According to a second embodiment, the invention relates to a process according to the first embodiment, characterized in that the plastic substrate comprises a polymeric material selected from the group, comprising or consisting of polycarbonate; polycarbonate blends, especially polycarbonate-polyester blends, polycarbonate-acrylonitrile butadiene styrene blends or mixtures thereof; polyester, polyester blends; acrylonitrile butadiene styrene; acrylonitrile butadiene styrene blends or mixtures thereof, preferably polycarbonate and/or polycarbonate-acrylonitrile butadiene styrene blends.

According to a third embodiment, the invention relates to a process according to the first or second embodiment, characterized in that the polyisocyanate A) is an aliphatic and/or cycloaliphatic polyisocyanate.

According to a fourth embodiment, the invention relates to a process according to any of the proceeding embodiments, characterized in that the polyisocyanate A) is a derivative of hexamethylene diisocyanate and/or pentamethylene diisocyanate.

According to a fifth embodiment, the invention relates to a process according to any of the proceeding embodiments, characterized in that the polyisocyanate A) is a hexamethylene diisocyanate trimer and/or a pentamethylene diisocyanate trimer.

According to a sixth embodiment, the invention relates to a process according to any of the proceeding embodiments, characterized in that the NCO-reactive compound B) is selected from the group, comprising or consisting of ethane-1,2-diol, propane-1,3-diol, propane-1,2-diol, butane-1,4-diol, glycerol, trimethylolpropane, pentaerythritol, polyether polyols, polyester polyols, polyurethane polyols, polysiloxane polyols, polycarbonate polyols, polyetherpolyamines, polybutadiene polyols, polyacrylate polyols, polymethacrylate polyols, copolymers thereof or mixtures thereof, preferably polyester polyols, polycarbonate polyols, polycarbonate-polyester polyols, polyacrylate polyols or mixtures thereof.

According to a seventh embodiment, the invention relates to a process according to any of the proceeding embodiments, characterized in that the thermally latent catalyst C) comprises or consists of a cyclic tin compound of the formular I, II or III or mixtures thereof: 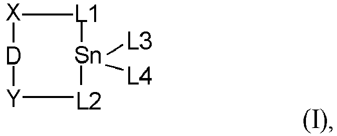 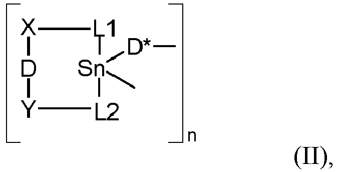 with n > 1, 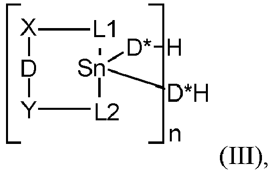 with n > 1, where:
D is -O-, -S- or -N(R1)-
where R1 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen or the radical 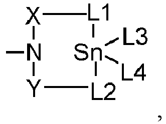
or R1 and L3 together are -Z-L5-;
D* is -O- or -S-;
X, Y and Z are identical or different radicals selected from alkylene radicals of the formulae -C(R2)(R3)-, -C(R2)(R3)-C(R4)(R5)- or -C(R2)(R3)-C(R4)(R5)-C(R6)(R7)- or ortho-arylene radicals of the formulae 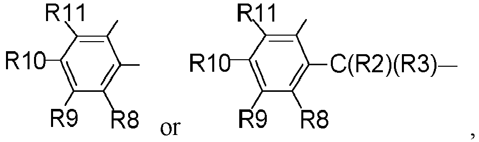
where R2 to R11 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen;
L1, L2 and L5 are independently -O-, -S-, -OC(=O)-, -OC(=S), -SC(=O)-, -SC(=S)-, -OS(=O)₂O-, -OS(=O)₂- or -N(R12)-,
where R12 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen;
L3 and L4 are independently -OH, -SH, -OR13, -Hal, -OC(=O)R14, -SR15, - OC(=S)R16, -OS(=O)₂OR17, -OS(=O)₂R18 or NR19R20, or L3 and L4 together are -L1-X-D-Y-L2-,
where R13 to R20 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen.

According to an eighth embodiment, the invention relates to a process according to any of the proceeding embodiments, characterized in that the thermally latent catalyst C) comprises or consists of a cyclic tin compound selected from the group, comprising or consisting of 4,12-Di-n-butyl-1,7,9,15-tetraoxa-4,12-diaza-8-stannaspiro[7.7]pentadecan, 4,12-Di-n-butyl-2,6,10,14-tetramethyl-1,7,9,15-tetraoxa-4,12-diaza-8-stannaspiro[7.7]pentadecan, 4,12-Di-n-butyl-2,2,10,10-tetramethyl-1,7,9,15-tetraoxa-4,12-diaza-8-stannaspiro[7.7]pentadecan, 4,12-Di-n-butyl-2,2,10-trimethyl-1,7,9,15-tetraoxa-4,12-diaza-8-stannaspiro[7.7]pentadecan, 4,12-Di-n-butyl-2,10-dimethyl-1,7,9,15-tetraoxa-4,12-diaza-8-stannaspiro[7.7]pentadecan, 4,12-Di-n-butyl-2,2-dimethyl-1,7,9,15-tetraoxa-4,12-diaza-8-stannaspiro[7.7]pentadecan, 4,12-Di-n-butyl-2-methyl-1,7,9,15-tetraoxa-4,12-diaza-8-stannaspiro[7.7]pentadecan, 2,2,4,10,10,12-Hexamethyl-1,7,9,15-tetraoxa-4,12-diaza-8-stannaspiro[7.7]pentadecan or mixtures thereof.

According to a ninth embodiment, the invention relates to a process according to embodiment 7 or 8, characterized in that the concentration of tin originated from the thermally latent catalyst C) is from 50 to 2000 ppm, preferably from 100 to 1500 ppm, more preferably from 500 to 1000 ppm, based on the solid content of the polyisocyanate A).

According to a tenth embodiment, the invention relates to a process according to any of the proceeding embodiments, characterized in that the ratio of polyisocyanates A) to NCO-reactive compounds B), based on the molar amounts of the polyisocyanates groups relative to the NCO-reactive groups, is from 0.8:1.0 to 2.0: 1.0, preferably from 1.0:1.0 to 1.5:1.0, more preferably from 1.05:1.0 to 1.25:1.0.

According to an eleventh embodiment, the invention relates to a process according to any of the proceeding embodiments, characterized in that a film forming step is conducted between step b) and c), wherein the film forming step is at least performed for a duration of 30 seconds.

According to a twelfth embodiment, the invention relates to a process according to any of the proceeding embodiments, characterized in that the curing in step c) takes place at a plastic substrate temperature below 120°C.

According to a thirteenth embodiment, the invention relates to a process according to any of the proceeding embodiments, characterized in that the curing in step c) is complete within less than 45 minutes.

According to a fourteenth embodiment, the invention relates to a single-layer polyurethane coated plastic substrate obtainable or obtained by a process according to any of embodiments one to thirteen.

According to a fifteenth embodiment, the invention relates to the use of a single-layer polyurethane coated plastic substrate according to embodiment fourteen for or as an automotive part(s) or other industrial plastic good(s), especially domestic appliances or electronic devices

According to a sixteenth embodiment, the invention relates to the use of a thermally latent catalyst, especially a thermally latent catalyst according to any of embodiments seven to nine, for improving the adhesion and/or the chemical resistance of a single-layer polyurethane coated plastic substrate according to claim fourteen.

### Examples

The present invention is discussed below with reference to examples, but is not limited thereto.

All percentages are based on weight, unless stated otherwise.

In order to produce a solventborne clearcoat as used on metal in a three-layer system in automotive OEM finishing, the polyol (Setalux 1774 SS-65) was mixed with a commercial levelling additive (Byk-331), a solvent mixture of butyl acetate and solvent naphtha (1: 1, in order to adjust the theoretical solids content to the same value) and optionally catalyst at room temperature. Catalyst was likewise optionally added to the polyisocyanate of component II, and mixed by agitation. The formulation was calculated such that there was an excess of polyisocyanate of 10%.

In order to produce the solventborne clearcoats for the single-layer polymer paint/coating system, the polyol Desmophen VP LS 2249/1 was mixed homogeneously with a commercial levelling additive (BorchiGel OL 17) and - in the case of comparative experiment 1 - the commercial catalyst Addocat 201, by vigorous mixing at room temperature. Thereafter, component I was diluted with BA such that the clearcoat formulation had a solids content of 34.3%.

The amount of the catalyst was calculated in both paints as "ppm of tin based on solid polyisocyanate resin".

Table 1 shows the compositions of the individual formulations.

The polycarbonate sheets were heat-treated at 120°C for 1 hour, then cleaned with isopropanol. All other substrates were merely cleaned with isopropanol and then used. In order to produce a clearcoat, the above-described mixtures were each applied to a sheet with a gravity flow cup gun (nozzle: SATA / 1.2 mm).

After film drawdown, all paints were flashed off at room temperature for 10 minutes. The OEM clearcoat finishes that are normally used in a three-layer system on metal were then dried at 80°C for 30 minutes, and the single-layer clearcoats at 100°C for 7 minutes (experiments 4+5) or at 100°C for 20 minutes (experiments 6-9). All paints were aged at 60°C for 16 hours and subjected to paint tests after no earlier than 1 hour at room temperature.

König **pendulum hardness** was determined in accordance with DIN EN ISO 1522:2007. Pendulum hardness was measured at different times. In all cases, the sheets were flashed off at room temperature after application for 10 minutes, and dried in an oven at 100°C for 7 minutes. Pendulum hardness was then measured either 1 h or 24 h after drying, or after the sheets had been aged at 60°C for 16 h, i.e. at least two sheets were produced for these measurements.

The **gloss** of the coatings obtained was measured by reflectometry to DIN EN ISO 2813:2105 at an angle of 20°. Gloss is reported in gloss units (GU).

In order to measure **layer thickness,** a digital surface profile gauge (Elcometer 223) from Elcometer, UK, was used according to DIN EN ISO 2808:2019 (method 1C).

As a measure of **resistance** to chemicals (premium gasoline (SB), MPA (methoxypropyl acetate), xylene (X), ethanol (EtOH), water (H₂O), ethyl acetate (EtAc) and/or methyl ethyl ketone (MEK)), a small cotton bud soaked with chemical according to DIN 51604-1 as test substance was placed onto the paint surface and covered with a watch glass in order to avoid evaporation. After an exposure period of 1 min or 5 min, the cotton bud soaked with the test substance was removed, and the exposed area was dried and immediately inspected visually and manually by touching and scratching. Softening and discoloration of the coating surface are assessed as follows:
0 = no changes; 1 = swelling ring, hard surface, only visible change / traces of change in color shade; 2 = swelling ring, slight softening / slight change in color shade; 3 = distinct softening (possibly slight blistering) / medium change in color shade / surface can be scratched; 4 = significant softening (possibly severe blistering), can be scratched through to the substrate / significant change in color shade; 5 = coating completely destroyed without outside influence / very significant change in color shade.

**Adhesive strength** ("adhesion") was determined by means of cross-cutting (crosscut adhesion test/diamond scratching test) according to DIN EN ISO 2409:2013 (distance between the blades 1 mm). Loose flakes of paint/coating were removed with the aid of a fabric adhesive tape (Scotch 389, 19 mm x 50 m, 0.26 mm, black) from 3M Deutschland, which was pressed onto the crosscut by finger and torn away abruptly. Damage to the paint was viewed with a magnifying glass and assessed visually, with 0 meaning no damage to the cut edges and 5 meaning complete detachment of the paint/coating within the grid.

In order to determine **adhesion after moisture exposure,** the coated sheets were stored at 90°C and 90% relative humidity for 5 days, then left to stand at room temperature for 1 hour for regeneration, and another crosscut test was conducted.

Tables 2 and 4 show the results of the performance tests by comparison.

### Starting compounds used

Unless stated otherwise, the materials were used without further pretreatment or cleaning.

### Desmophen VPLS 2249/1

Solvent-free branched short-chain polyester polyol having an OH content of 15.5% and a viscosity of 1900 mPas at 23°C. Produced by Covestro Deutschland AG, Leverkusen, DE.

### Desmophen C 1200

Linear aliphatic polycarbonate polyester having a hydroxyl number of about 56.1 mg KOH/g. Produced by Covestro Deutschland AG, Leverkusen, Germany.

### Desmodur ultra N 3900

Aliphatic polyisocyanate resin based on hexamethylene diisocyanate and having an NCO content of 23.5% and a viscosity of 730 mPas at 23°C. Produced by Covestro Deutschland AG, Leverkusen, DE.

### Desmodur N 3200

Aliphatic polyisocyanate resin based on hexamethylene diisocyanate (low-viscosity HDI biuret), having an NCO content of 23% and a viscosity of 2500 mPas at 23°C. Produced by Covestro Deutschland AG, Leverkusen, Germany.

### Desmodur ultra N3300

Aliphatic polyisocyanate resin based on hexamethylene diisocyanate (HDI trimer) and having an NCO content of 21.8% and a viscosity of 2500 mPas at 25°C. Produced by Covestro Deutschland AG, Leverkusen, Germany.

### Desmodur ultra N 3390 BA

Aliphatic polyisocyanate (HDI trimer), 90% solution in butyl acetate, having an NCO content of 19.6% and a viscosity of about 450 mPas at 25°C. Produced by Covestro Deutschland AG, Leverkusen, Germany.

### BorchiGel OL 17

Additive for improving the levelling of a paint formulation, used as a 10% solution in butyl acetate. Produced by OMG AG + Co. KG, Langenfeld, Germany.

### Addocat 201

Dibutyltin dilaurate, used as a 10% solution in butyl acetate. Obtained from Lanxess AG, Cologne, Germany.

### Setalux 1774 SS-65

Solventborne polyacrylic resin having an OH content of 5%, based on solids, 64-66% in Solvent Naphtha:butyl acetate:t-butanol (57:40:3). Obtained from Allnex GmbH, Frankfurt, Germany.

### Byk 331

Polyether-modified polydimethylsiloxane, used as levelling aid. Produced by BYK-Chemie GmbH, Wesel, Germany.

### Butyl acetate

n-Butyl acetate, CAS 123-86-4, solvent, produced by BASF SE, Ludwigshafen, Germany.

### MPA

1-Methoxy-2-propyl acetate, CAS 108-65-6, solvent, produced by BASF SE, Ludwigshafen, Germany.

### Solvent Naphtha

CAS 64742-94-6, solvent, produced by Azelis Deutschland GmbH, Sankt Augustin, Germany.

**Cat** 1 - **thermolatent catalyst** - 4,12-di-n-butyl-2,6,10,14-tetramethyl-1,7,9,15-tetraoxa-4,12-diaza-8-stannaspiro[7.7]pentadecane, used as a 10% solution in butyl acetate Processes for preparing the thermally latent catalysts suitable in accordance with the invention are described, for example, in: EP 2 900 716 A1, EP 2 900 717 A1, EP 2 772 496 A1, EP 14182806, J. Organomet. Chem. 2009 694 3184- 3189, Chem. Heterocycl.Comp. 2007 43 813- 834, Indian J. Chem. 1967 5 643- 645 and in literature cited therein, the entire disclosure content of which is hereby incorporated by reference.

### Substrates used

Substrates used for the solventborne clearcoats as used in OEM automotive finishing were the following materials for testing of adhesion strength:
- Makrofol DE 1-1 (polycarbonate), produced by Covestro Deutschland AG, Leverkusen, Germany.
- Makroblend UT 235M colour 901510 (polycarbonate/polyester), produced by Covestro Deutschland AG, Leverkusen, Germany.
- Polycarbonate AG2677-550396, produced by Covestro Deutschland AG, Leverkusen, Germany.
- Durethan BKV 30 H2.0 black (polyamide), produced by Lanxess, Cologne, Germany.
- Bayblend T 65 SF (PC/ABS), produced by Covestro Deutschland AG, Leverkusen, Germany.

The substrate used for the single-layer polymer paint was films of polycarbonate with the trade name **Bayfol DF 1-2** (PC/ABS, produced by Covestro Deutschland AG, Leverkusen, Germany), and **Makrofol DE 1-1** (see above). Before painting/coating, the sheets were heat-treated at 120°C for 1 hour and then cleaned with isopropyl alcohol.

**Table 1: OEM finishing clearcoat formulations. All figures in g unless stated otherwise.**

| **Example** | **1 (comp.)** | **2 (comp.)** | **3 (comp.)** |
|---|---|---|---|
| **Component I** | | | |
| Setalux 1774 SS-65, as supplied | 100.0 | 100.0 | 100.0 |
| Byk-331, as supplied | 0.25 | 0.25 | 0.25 |
| Cat 1 | | 1.4 | |
| MPA : Solvent Naphtha (1:1) | 27.3 | 27.3 | 27.3 |
| | | | |

| **Component II** | | | |
|---|---|---|---|
| Desmodur N 3300 | 33.7 | 33.7 | 33.7 |
| Cat 1 | 1.4 | | 1.05 |
| Butyl acetate | 2.5 | 2.5 | 2.8 |
| ppm of tin, based on solids content of the polyisocyanate | 1000 | 1000 | 750 |

| | | | |
|---|---|---|---|
| comp. = comparative example | | | |

**Table 2: Overview of the test results of the OEM finishing clearcoats, applied to various substrates.**

| **Example** | **1 (comp.)** | **2 (comp.)** | **3 (comp.)** |
|---|---|---|---|
| Layer thickness on glass | 33 µm | 32 µm | 30 µm |
| Pendulum hardness [s] | 171 | 182 | 177 |
| Resistance to SB / MPA / X / EtOH / H₂O (1 min) | 0/0/0/0/0 | 0/0/0/0/0 | 0/0/0/0/0 |
| Resistance to MEK | 1/4 | 0/4 | 1/4 |
| (1 min / 5 min) | | | |
| Resistance to EtAC | 0/0 | 0/0 | 0/0 |
| (1 min / 5 min) | | | |
| Adhesion on Makrofol DE 1-1 | 5/5 | 5/5 | 5/5 |
| (0 value / after 5d at 90°C, 90%) | | | |
| Adhesion on Makroblend UT 235 M | 2/5 | 0/5 | 0/5 |
| (0 value / after 5d at 90°C, 90%) | | | |
| Adhesion on PC AG2677-550396 | 5/5 | 5/5 | 5/5 |
| (0 value / after 5d at 90°C, 90%) | | | |
| Adhesion on Durethan BKV 30 H2.0 | 5/5 | 5/5 | 5/5 |
| (0 value / after 5d at 90°C, 90%) | | | |
| Adhesion on Bayblend T65 SF | 5/5 | 5/5 | 5/5 |
| (0 value / after 5d at 90°C, 90%) | | | |

| | | | |
|---|---|---|---|
| comp. = comparative example | | | |

As can be seen in table 2, none of the clearcoats as typically used in OEM automotive finishing in a three-layer system on metal provides adequate adhesion, particularly after moisture exposure, on standard polymer substrates.

Therefore, clearcoats were developed, as typically used in plastic coating, and applied as single-layer coatings (see Table 3).

**Table 3: Plastic clearcoat formulations. All figures in g unless stated otherwise.**

| **Example** | **4 (comp.)** | **5** | **6** | **7 (comp.)** | **8** | **9 (comp.)** |
|---|---|---|---|---|---|---|
| **Component I** | | | | | | |
| Desmophen VP LS 2249/1 | 100.0 | 100.0 | 80 | 80 | 80 | 80 |
| Desmophen C 1200 | | | 20 | 20 | 20 | 20 |
| Borchi Gel OL 17, 10% in BA | 2.6 | 2.8 | 2.5 | 2.4 | 2.4 | 2.4 |
| Addocat 201, 10% in BA | 1.1 | | | 1.0 | | 1.0 |
| Butyl acetate | 499.9 | 514.3 | 229.8 | 225.7 | 222.1 | 221.3 |
| | | | | | | |

| **Component II** | | | | | | |
|---|---|---|---|---|---|---|
| Desmodur ultra N 3900 | 162.9 | | | | | |
| Desmodur ultra N 3390 BA | | | | 160.6 | | |
| Desmodur N 3390 BA + Cat 1, content of Sn in crosslinker is 750 ppm | | 200.4 | 164.8 | | | |
| Desmodur N3200, 90% in BA | | | | | | 155.1 |
| Desmodur N 3200, diluted to 90% with BA, + Cat 1, content of SN in crosslinker is 750 ppm | | | | | 155.1 | |
| | | | | | | |
| ppm of tin, based on solids content of the polyisocyanate | 750 | 750 | 750 | 750 | 750 | 750 |

| | | | | | | |
|---|---|---|---|---|---|---|
| comp. = comparative example | | | | | | |

**Table 4: Overview of the performance test results of the polymer clearcoat formulations.**

| **Example** | **4 (comp.)** | **5** | **6** | **7 (comp.)** | **8** | **9 (comp.)** |
|---|---|---|---|---|---|---|
| **Layer thickness [µm]** | 26 | 20 | 30 | 31 | 29 | 27 |
| **Gloss measurement 20°** | -- | -- | -- | -- | -- | -- |
| 0 value | 84.9 | 86.0 | -- | -- | -- | -- |
| Immediately after scratching | 45.4 | 40.9 | - | -- | -- | -- |
| After 1 h at RT | 67.1 | 42.4 | -- | -- | -- | -- |
| + 2 h at 60°C | 79.1 | 84.2 | -- | -- | -- | -- |
| % gloss after reflow | 93.2 | 97.9 | -- | -- | -- | -- |
| Adhesion on ... | | | | | | |
| **Adhesion** on Bayfol DF 1-2 (0 value / after 5 d at 90°C, 90%) | 5 / -- | 0-1 / -- | 1 / deformed | 1 / deformed | 1 / deformed | 1 / deformed |
| Adhesion on Makrofol DE 1-1 | 2 / -- | 4 / -- | 1 / 1 | 1 / 5 | 1 / 1 | 1 / 1 |
| (0 value / after 5d at 90°C, 90%) | | | | | | |
| Adhesion on Makroblend UT 235 M | -- | -- | 1 / 1 | 1 / 5 | 1 / 2 | 1 / 4-5 |
| (0 value / after 5d at 90°C, 90%) | | | | | | |
| Adhesion on PC AG2677-550396 | -- | -- | 5 / 5 | 5 / 5 | 1 / 1 | 1 / 1 |
| (0 value / after 5d at 90°C, 90%) | | | | | | |
| Adhesion on Durethan BKV 30 H2.0 | -- | -- | 2 / 4 | 5 / 5 | 1 / 1 | 5 / 5 |
| (0 value / after 5d at 90°C, 90%) | | | | | | |
| Adhesion on Bayblend T65 SF | -- | -- | 1 / 1 | 1 / 1 | 1 / 1 | 1 / 1 |
| (0 value / after 5d at 90°C, 90%) | | | | | | |
| Chem. resistance to MEK (1 min / 5 min) | 5 / 5 | 0 / 0 | 1 / 1 | 1 / 1 | 1 / 1 | 5 / 5 |
| Chem. resistance to EtAC (1 min / 5 min) | 4 / 5 | 0 / 0 | 1 / 1 | 1 / 1 | 1 / 1 | 1 / 1 |
| Chem. resistance to SB / MPA / X / EtOH / H₂O (1 min) | 1 / 1/ 1/ 1/ 0 | 0 /0 / 0 / 0 / 0 | 1 / 0 / 0 / 0 / 0 | 1 / 1 / 1 / 1 / 0 | 1 / 1 / 1 / 1 / 0 | 1 / 1 / 1 / 1 / 0 |
| **Pendulum hardness** [s] after 1h RT /24 h RT / 16h 60°C | 12 / 70 / 106 | 11 / 19 / 153 | 73 / 87 / 151 | 55 / 67 / 120 | 26 / 37 / 94 | 58 / 72 / 103 |

| | | | | | | |
|---|---|---|---|---|---|---|
| comp. = comparative example; -- = not determined | | | | | | |

As can be seen from table 4, the clearcoat formulation of the invention is superior to the comparative example in many aspects. Residual gloss after reflow is much higher in inventive experiment 5 than in comparative experiment 4; adhesion on Bayfol DF 1-2 is considerably better, as well as chemical resistance. Unusually, pendulum hardness of comparative experiment 4 is much higher after 24 h than that in experiment 5, but final hardness is much higher after ageing at 60°C for 16 h.

In experiments in which component I consists both of polyester polyol and a polycarbonate polyol (experiments 6-9), advantages are also apparent when the thermolatent catalyst of the invention is used. Thus, particularly adhesion after moisture exposure is much better in many cases for examples 6 and 8 (according to the invention) than in comparative experiments 5 and 7, in which a conventional catalyst, added to component A, was used.

**Table 5: Plastic clearcoat formulations and performance test results.**

| **Example** | **10 (comp.)** | **11** | **12 (comp.)** | **13** |
|---|---|---|---|---|
| **Component I** | | | | |
| Desmophen VP LS 2249/1 | 100.0 | 100.0 | 100.0 | 100.0 |
| Borchi Gel OL 17, 10% in BA | 2.6 | 2.6 | 2.8 | 2.8 |
| Addocat 201, 10% in BA | 1.1 | | 1.1 | |
| Butyl acetate | 388.7 | 391.7 | 391.3 | 398.5 |

| Component II | | | | |
|---|---|---|---|---|
| Desmodur ultra N 3900 | 162.9 | | | |
| Desmodur N 3900 + Cat 1, content of Sn in crosslinker is 750 ppm | | 168.0 | | |
| Desmodur ultra N 3390 BA | | | 195.4 | |
| Desmodur N 3390 BA + Cat 1, content of Sn in crosslinker is 750 ppm | | | | 200.5 |
| NCO:OH | 1.0 | 1.0 | 1.0 | 1.0 |
| ppm of tin, based on solids content of the polyisocyanate | 750 | 750 | 750 | 750 |
| Layer thickness [µm] | 19 | 13 | 25 | 21 |

| **Performance testing results** | | | | |
|---|---|---|---|---|
| Chem. resistance to SB / MPA / X / EtOH / H₂O (1 min) | 0 / 1 / 0 / 1 / 0 | 0 / 0 / 0 / 0 / 0 | 0 / 0 / 0 / 1 / 0 | 0 / 0 / 0 / 0 / 0 |
| Chem. resistance to MEK (1/5 min) | 5 / 5 | 0 / 5 | 5 / 5 | 0 / 0 |
| Chem. resistance to EtAC (1/5 min) | 5 / 5 | 0 / 5 | 0 / 0 | 0 / 0 |
| Adhesion on Makroblend UT 235 M (0 value / after 5d at 90°C, 90%) | 0 / 5 | 0 / 0 | 0 / 5 | 0 / 0 |
| Adhesion on Durethan BKV 30 H2.0 (0 value / after 5d at 90°C, 90%) | 5 / 5 | 0 / 5 | 5 / 5 | 5 / 5 |
| Adhesion on Bayblend T65 SF (0 value / after 5d at 90°C, 90%) | 0 / 0 | 0 / 0 | 0 / 0 | 0 / 0 |

| | | | | |
|---|---|---|---|---|
| comp. = comparative example | | | | |

The results shown in table 5 document that the coating performance of clearcoat formulations according to the invention (examples 11, 13) with 2 different hardeners outperform the respective comparative examples (10, 12) in chemical resistance as well as in adhesion on several plastic substrates.

## Claims

1. A process for producing a single-layer polyurethane coated plastic substrate, comprising or consisting of the following steps:
a) providing a plastic substrate;
b) applying a polyurethane coating system onto the substrate;
c) curing the polyurethane coating system to form the single-layer polyurethane coated plastic substrate;
wherein the polyurethane coating system comprises or consists of
A) at least one polyisocyanate;
B) at least one NCO-reactive compound;
C) at least one thermally latent catalyst;
D) optionally auxiliaries and/or additives.

2. The process as claimed in claim 1, **characterized in that** the plastic substrate comprises a polymeric material selected from the group, comprising or consisting of polycarbonate; polycarbonate blends, especially polycarbonate-polyester blends, polycarbonate-acrylonitrile butadiene styrene blends or mixtures thereof; polyester, polyester blends; acrylonitrile butadiene styrene; acrylonitrile butadiene styrene blends or mixtures thereof, preferably polycarbonate and/or polycarbonate-acrylonitrile butadiene styrene blends.

3. The process as claimed in claim 1 or 2, **characterized in that** the polyisocyanate A) is an aliphatic and/or cycloaliphatic polyisocyanate.

4. The process according to any of the proceeding claims, **characterized in that** the polyisocyanate A) is a derivative of hexamethylene diisocyanate and/or pentamethylene diisocyanate.

5. The process according to any of the proceeding claims, **characterized in that** the polyisocyanate A) is a hexamethylene diisocyanate trimer and/or a pentamethylene diisocyanate trimer.

6. The process according to any of the proceeding claims, **characterized in that** the NCO-reactive compound B) is selected from the group, comprising or consisting of ethane-1,2-diol, propane-1,3-diol, propane-1,2-diol, butane-1,4-diol, glycerol, trimethylolpropane, pentaerythritol, polyether polyols, polyester polyols, polyurethane polyols, polysiloxane polyols, polycarbonate polyols, polyetherpolyamines, polybutadiene polyols, polyacrylate polyols, polymethacrylate polyols, copolymers thereof or mixtures thereof, preferably polyester polyols, polycarbonate polyols, polycarbonate-polyester polyols, polyacrylate polyols or mixtures thereof.

7. The process according to any of the proceeding claims, **characterized in that** the thermally latent catalyst C) comprises or consists of a cyclic tin compound of the formular I, II or III or mixtures thereof: 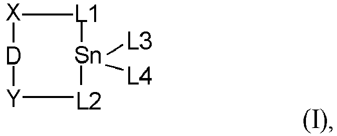 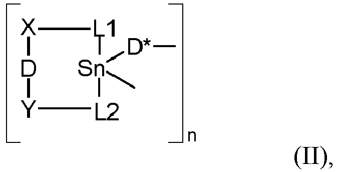 with n > 1, 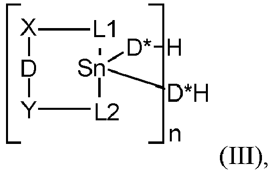 with n > 1, where:
D is -O-, -S- or -N(R1)-
where R1 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen or the radical 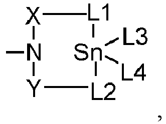 or R1 and L3 together are -Z-L5-;
D* is -O- or -S-;
X, Y and Z are identical or different radicals selected from alkylene radicals of the formulae -C(R2)(R3)-, -C(R2)(R3)-C(R4)(R5)- or -C(R2)(R3)-C(R4)(R5)-C(R6)(R7)- or ortho-arylene radicals of the formulae 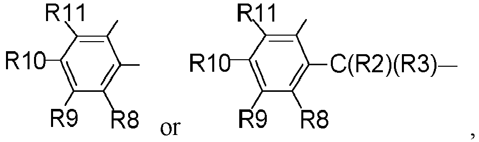 where R2 to R11 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen;
L1, L2 and L5 are independently -O-, -S-, -OC(=O)-, -OC(=S), -SC(=O)-, -SC(=S)-, - OS(=O)₂O-, -OS(=O)₂- or -N(R12)-,
where R12 is a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen;
L3 and L4 are independently -OH, -SH, -OR13, -Hal, -OC(=O)R14, -SR15, - OC(=S)R16, -OS(=O)₂OR17, -OS(=O)₂R18 or -NR19R20, or L3 and L4 together are - L1-X-D-Y-L2-,
where R13 to R20 are independently saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen.

8. The process according to any of the proceeding claims, **characterized in that** the thermally latent catalyst C) comprises or consists of a cyclic tin compound selected from the group, comprising or consisting of 4,12-Di-n-butyl-1,7,9,15-tetraoxa-4,12-diaza-8-stannaspiro[7.7]pentadecan, 4,12-Di-n-butyl-2,6,10,14-tetramethyl-1,7,9,15-tetraoxa-4,12-diaza-8-stannaspiro[7.7]pentadecan, 4,12-Di-n-butyl-2,2,10,10-tetramethyl-1,7,9,15-tetraoxa-4,12-diaza-8-stannaspiro[7.7]pentadecan, 4,12-Di-n-butyl-2,2,10-trimethyl-1,7,9,15-tetraoxa-4,12-diaza-8-stannaspiro[7.7]pentadecan, 4,12-Di-n-butyl-2,10-dimethyl-1,7,9,15-tetraoxa-4,12-diaza-8-stannaspiro[7.7]pentadecan, 4,12-Di-n-butyl-2,2-dimethyl-1,7,9,15-tetraoxa-4,12-diaza-8-stannaspiro[7.7]pentadecan, 4,12-Di-n-butyl-2-methyl-1,7,9,15-tetraoxa-4,12-diaza-8-stannaspiro[7.7]pentadecan, 2,2,4,10,10,12-Hexamethyl-1,7,9,15-tetraoxa-4,12-diaza-8-stannaspiro[7.7]pentadecan or mixtures thereof.

9. The process according to claim 7 or 8, **characterized in that** the concentration of tin originated from the thermally latent catalyst C) is from 50 to 2000 ppm, preferably from 100 to 1500 ppm, more preferably from 500 to 1000 ppm, based on the solid content of the polyisocyanate A).

10. The process according to any of the proceeding claims, **characterized in that** the ratio of polyisocyanates A) to NCO-reactive compounds B), based on the molar amounts of the polyisocyanates groups relative to the NCO-reactive groups, is from 0.8:1.0 to 2.0:1.0, preferably from 1.0:1.0 to 1.5:1.0, more preferably from 1.05:1.0 to 1.25:1.0.

11. The process according to any of the proceeding claims, **characterized in that** a film forming step is conducted between step b) and c), wherein the film forming step is at least performed for a duration of 30 seconds.

12. The process according to any of the proceeding claims, **characterized in that** the curing in step c) takes place at a plastic substrate temperature below 120°C.

13. A single-layer polyurethane coated plastic substrate obtainable or obtained by a process according to any of claims 1 to 12.

14. Use of a single-layer polyurethane coated plastic substrate according to claim 13 for or as an automotive part(s) or other industrial plastic good(s), especially domestic appliances or electronic devices.

15. Use of a thermally latent catalyst, especially a thermally latent catalyst according to any of claims 7 to 9, for improving the adhesion and/or the chemical resistance of a single-layer polyurethane coated plastic substrate according to claim 13.
